# FASCICULE DE BREVET EUROPEEN

(11) **EP 3 073 146 B1**
(45) Date de publication et mention de la délivrance du brevet: **22.05.2019**
(21) Numéro de dépôt: 16162462.2
(22) Date de dépôt: 25.03.2016
(51) Int. Cl.: F16F 15/129, F16F 15/14

(54) **COMPOSANT POUR SYSTEME DE TRANSMISSION, NOTAMMENT DISQUE D'EMBRAYAGE**
KOMPONENTE FÜR ÜBERTRAGUNGSSYSTEM, INSBESONDERE KUPPLUNGSSCHEIBE
COMPONENT FOR TRANSMISSION SYSTEM, IN PARTICULAR A CLUTCH DISC

(30) Priorité: 27.03.2015 FR 1552630
(43) Date de publication de la demande: 28.09.2016
(73) Titulaire: Valeo Embrayages, 80009 Amiens Cedex 2 (FR)
(72) Inventeur: MARECHAL, Olivier, 80000 Lahoussoye (FR); BOITELLE, Maxence, 62118 Biache Saint Vaast (FR)
(74) Mandataire: Cardon, Nicolas

(56) Documents cités:
- DE-A1-102010 049 929
- FR-A1- 2 578 605
- FR-A1- 2 593 575
- US-A1- 2013 206 529

## Description

La présente invention concerne un composant pour système de transmission tel qu'un disque d'embrayage, le composant comprenant un dispositif d'amortissement d'oscillations de torsion.

Afin de filtrer des oscillations de torsion se propageant dans le système de transmission du fait des acyclismes du moteur thermique, il est connu d'utiliser un dispositif d'amortissement de ces oscillations de torsion présentant une fréquence de résonance fixe et indépendante de la vitesse de rotation du moteur thermique, un tel dispositif étant encore appelé batteur. Ces oscillations de torsion peuvent aussi être dues aux vibrations générées dans la zone de l'embrayage et se manifestant dans la chaîne cinématique du véhicule lors de la phase de glissement de l'embrayage.

La demande WO 2011/060752 divulgue ainsi un batteur intégré dans un disque d'embrayage et muni d'un système de génération d'hystérésis. Le système de génération d'hystérésis est formé : d'une part par des rampes ménagées sur la masse de filtrage du batteur, et d'autre part par des contre-rampes portées par une rondelle et coopérant avec ces rampes lors de la rotation de cette masse de filtrage. Une masse de filtrage selon WO 2011/060752 est relativement complexe et coûteuse à réaliser. En outre, l'intégration dans le disque d'embrayage du batteur selon WO 2011/060752 rend ce dernier relativement volumineux. Les documents US 2013/206529 A1, FR 2 593 575 A1 décrivent aussi ce type de dispositif.

Il existe un besoin pour bénéficier d'un composant pour système de transmission d'encombrement réduit, tout en intégrant un dispositif d'amortissement d'oscillations de torsion relativement simple et peu coûteux à réaliser, ce dernier assurant un filtrage efficace des oscillations de torsion.

L'invention a pour but de répondre à tout ou partie de ce besoin, et elle y parvient, selon l'un de ses aspects, à l'aide d'un composant pour système de transmission de véhicule, comprenant :
- une entrée en couple,
- une sortie en couple mobile en rotation autour d'un axe,
- un support, disposé dans le chemin emprunté par le couple transmis par le composant entre l'entrée en couple et la sortie en couple,
- un dispositif d'amortissement d'oscillations de torsion, hors du chemin emprunté par le couple transmis par le composant entre l'entrée en couple et la sortie en couple, le dispositif d'amortissement d'oscillations de torsion présentant une fréquence fixe de résonance, et
- un système de génération d'hystérésis pour le dispositif d'amortissement d'oscillations de torsion,
caractérisé en ce que le dispositif d'amortissement d'oscillations de torsion (12) est disposé d'un premier côté du support (6) et en ce qu'au moins une partie du système de génération d'hystérésis est disposée d'un deuxième côté du support, axialement opposé au premier côté du support.

Grâce à cette disposition du dispositif d'amortissement d'oscillations de torsion et du système de génération d'hystérésis sur des côtés différents du support, on utilise au mieux l'espace disponible dans le composant pour insérer le dispositif d'amortissement d'oscillations de torsion et le système de génération d'hystérésis qui lui est associé. On réduit ainsi l'encombrement dans le composant lié à la présence dans ce dernier du dispositif d'amortissement d'oscillations de torsion et du système de génération d'hystérésis.

Chacun du dispositif précité et du système précité peut ne s'étendre ainsi axialement que d'un seul côté du support.

Le dispositif d'amortissement d'oscillations de torsion peut ne s'étendre axialement que du premier coté du support.

Le dispositif d'amortissement d'oscillations de torsion s'étend par exemple uniquement du premier côté du support tandis que le système de génération d'hystérésis s'étend alors uniquement du deuxième côté du support.

Le dispositif d'amortissement d'oscillations de torsion présente une fréquence de résonance fixe, indépendante de la vitesse de rotation du moteur thermique. Un tel dispositif est encore appelé « batteur », étant différent d'un pendule. Le batteur peut permettre de remédier aux problèmes de broutement.

La fréquence de résonance du batteur est par exemple comprise entre 6 Hz et 14 Hz, notamment entre 8 Hz et 14 Hz. Une telle fréquence de résonance est particulièrement adaptée pour remédier aux problèmes de broutement.

Au sens de la présente demande :
- « axialement » signifie « parallèlement à l'axe de rotation »,
- « radialement » signifie « perpendiculairement à l'axe de rotation et le long d'un axe coupant cet axe de rotation »,
- « orthoradialement » signifie «perpendiculairement à une direction radiale, dans un plan perpendiculaire à l'axe de rotation »,
- « angulairement » signifie « autour de l'axe de rotation»,
- « deux pièces sont solidaires » signifie qu'elles sont rigidement couplées, sauf lorsqu'il est explicitement précisé de quelle façon ces pièces sont solidaires. Ainsi par exemple, « deux pièces solidaires en rotation » n'indique rien quant à la possibilité ou non d'un mouvement de translation entre ces deux pièces, ces deux options étant alors possibles, et
- « le dispositif d'amortissement d'oscillations de torsion est au repos » signifie que ce dispositif est soumis à des forces centrifuges mais non à des oscillations de torsion issues d'acyclismes du moteur thermique.

Dans le cas présent, le composant peut être dépourvu de tout amortisseur d'oscillations de torsion autre que le dispositif d'amortissement d'oscillations de torsion ou « batteur » précité, l'entrée en couple et la sortie en couple étant alors solidaires en rotation.

Le dispositif d'amortissement d'oscillations de torsion peut comprendre :
- un composant primaire, solidaire en rotation de la sortie en couple, et
- un composant secondaire, mobile en rotation autour de l'axe par rapport au composant primaire contre une force de rappel élastique,
le système de génération d'hystérésis permettant le déplacement avec hystérésis du composant secondaire par rapport au composant primaire.

Le composant primaire peut être solidaire en rotation du support par l'intermédiaire de la sortie de couple, le composant n'étant pas solidaire en rotation par l'intermédiaire d'organes de fixation, tels que des rivets, spécifiquement dédiés à cette fonction.

Le composant secondaire peut s'étendre majoritairement radialement extérieurement par rapport au composant primaire.

Le système de génération d'hystérésis exerce par exemple sur le composant secondaire un couple compris entre 0,1 Nm et 2 Nm, la valeur maximale de couple d'hystérésis étant obtenue lorsque le composant secondaire tourne par rapport au composant primaire d'une valeur angulaire égale à l'amplitude du mouvement de rotation.

Le couple d'hystérésis exercé peut être constant ou variable.

Un système de génération de couple d'hystérésis non constant peut comprendre au moins une rampe portée par une pièce solidaire en rotation du composant secondaire et disposée du deuxième côté du support. La présence de cette rampe permet de faire varier le couple d'hystérésis. La rampe n'est ainsi pas ménagée dans le composant secondaire, qui joue le rôle d'une masse de filtrage, mais elle est portée par une pièce distincte de ce dernier et solidaire de ce dernier. La rampe peut ainsi être réalisée dans une pièce spécifiquement choisie, notamment via ses dimensions, sa forme et le cas échéant le ou les matériaux dans lesquels elle est réalisée, pour participer à la réalisation de cette fonction d'hystérésis. Le composant secondaire, dans lequel cette rampe n'est pas réalisée, peut par ailleurs être plus simple et moins coûteux à réaliser. Le support est alors axialement positionné entre la pièce portant la ou les rampes et le composant secondaire.

Cette pièce peut présenter une forme annulaire évidée, et plusieurs rampes se succédant angulairement peuvent alors être portées par cette pièce. L'axe de rotation peut traverser la zone évidée de la pièce. La ou les rampes peuvent être soit ménagées directement dans cette pièce, soit être ménagée autrement, par exemple par ajout de matière local sur cette pièce ou via une autre pièce rapportée.

Le système de génération d'hystérésis peut comprendre au moins une contre-rampe disposée du deuxième côté du support et solidaire du support, la rampe et la contre-rampe interagissant par frottement lors de la rotation du composant secondaire par rapport au composant primaire.

La contre-rampe peut être ménagée directement dans le support, dans le deuxième côté de ce dernier. En variante, la contre-rampe peut être : soit ménagée dans une pièce distincte du support, disposée du deuxième côté de ce dernier, et solidaire de ce dernier, soit réalisée par ajout de matière local sur le deuxième côté du support.

Le cas échéant, plusieurs contre-rampes se succédant angulairement peuvent être prévues.

Selon un exemple précis de mise en oeuvre de l'invention, le couple d'hystérésis exercé lors de la rotation du composant secondaire par rapport au composant primaire peut d'abord être croissant puis constant. Dans ce but, la ou chaque rampe peut être adjacente à un plateau et la ou chaque contre-rampe peut également être adjacente à un plateau. Lorsqu'une rampe et une contre-rampe interagissent par frottement, un couple d'hystérésis croissant est exercé sur le composant secondaire, tandis que lorsque les deux plateaux interagissent par frottement, le couple d'hystérésis est constant.

Dans tout ce qui précède, le nombre de contre-rampes peut être égal au nombre de rampes. Ce nombre est par exemple compris entre deux et six, étant par exemple égal à quatre. Il y a alors quatre rampes et quatre contre-rampes.

Dans tout ce qui précède, chaque rampe peut faire saillie en direction de la contre rampe, présentant notamment un profil convexe tandis que chaque contre-rampe présente alors un profil concave. L'inverse est possible, chaque contre-rampe faisant alors saillie en direction de la rampe, chaque contre-rampe présentant notamment un profil convexe tandis que chaque rampe présente alors un profil concave.

Toutes les contre-rampes peuvent avoir la même forme. Toutes les rampes peuvent avoir la même forme.

Dans tout ce qui précède, la ou les rampes et la ou les contre-rampes peuvent être disposées radialement intérieurement par rapport au composant secondaire, c'est-à-dire qu'elles sont situées à une distance radiale de l'axe de rotation qui est inférieure à la distance radiale la plus grande entre le composant secondaire et l'axe de rotation. La pièce portant la rampe peut être mobile axialement par rapport au support, de sorte que l'interaction par frottement entre la rampe et la contre-rampe puisse entraîner un déplacement axial par rapport au support de la pièce portant la rampe.

Dans tout ce qui précède, le composant pour système de transmission peut comprendre au moins un organe de liaison du composant secondaire et de la pièce portant la rampe, cet organe de liaison étant rigidement couplé d'une part au composant secondaire et d'autre part à ladite pièce, et étant reçu dans une cavité ménagée dans le support. Ainsi, la pièce portant la ou les rampes et le composant secondaire peuvent alors ne présenter aucun degré de liberté l'un par rapport à l'autre, n'étant alors pas uniquement solidaires en rotation. L'organe de liaison est par exemple un rivet.

Le cas échéant, plusieurs organes de liaison, notamment plusieurs rivets, sont répartis angulairement pour solidariser le composant secondaire et la pièce portant la ou les rampes. Grâce à cette solidarisation du composant secondaire et de la pièce portant la ou les rampes, le déplacement en rotation du composant secondaire, lorsque des oscillations de torsion liées à des acyclismes du moteur thermique sont perçues, entraîne un déplacement en rotation de la pièce. La ou les rampes vont alors interagir par frottement avec la ou les contre-rampes, générant ainsi un couple d'hystérésis variable pour le déplacement du composant secondaire par rapport au composant primaire. Du fait de cette interaction par frottement entre rampe(s) et contre-rampe(s) le déplacement axial précité de la pièce par rapport au support va avoir lieu.

Lorsque le dispositif d'amortissement d'oscillations de torsion, l'organe de liaison, et la pièce portant la rampe forment un seul ensemble solidaire en déplacement axial, l'interaction par frottement entre la rampe et la contre-rampe va pouvoir entraîner un déplacement axial par rapport au support de cet ensemble solidaire.

Dans tout ce qui précède, la cavité ménagée dans le support et dans laquelle est reçu l'organe de liaison peut être définie par un contour fermé dont les extrémités angulaires agissent comme butée pour le déplacement en rotation du composant secondaire par rapport au composant primaire du dispositif d'amortissement d'oscillations de torsion. Autrement dit, l'organe de liaison peut reposer en permanence dans la cavité, quelles que soient les positions relatives du composant primaire et du composant secondaire, et sa venue contre l'une des extrémités angulaires du contour de la cavité limite le déplacement en rotation du composant secondaire par rapport au composant primaire dans le sens trigonométrique, tandis que sa venue en butée contre l'autre extrémité angulaire du contour de la cavité limite le déplacement en rotation du composant secondaire par rapport au composant primaire dans le sens non-trigonométrique. En effet, comme vu précédemment, l'organe de liaison étant solidaire du composant secondaire, toute immobilisation en rotation pour l'un constitue une immobilisation en rotation pour l'autre.

La présence d'une telle butée fournie par l'organe de liaison permet de donner à ce dernier une fonction additionnelle d'organe de butée, exploitant ainsi au mieux les éléments déjà présents dans le composant pour système de transmission.

La cavité présente par exemple une dimension angulaire mesurée entre ses extrémités angulaires telle que le composant secondaire puisse se déplacer en rotation par rapport au composant primaire selon une amplitude de rotation comprise entre 10° et 20°, cette amplitude de rotation étant de préférence comprise entre 14° et 18°, étant notamment de 15°, cette valeur d'amplitude étant mesurée entre la position de repos du composant secondaire et l'une quelconque des positions de butée contre une extrémité angulaire de la cavité. Au repos, l'organe de liaison se trouve par exemple angulairement à égale distance des extrémités angulaires de la cavité.

Plusieurs cavités se succédant angulairement peuvent être prévues dans le support. Chacune de ces cavités peut recevoir un unique organe de liaison.

Le cas échéant, un moyen d'indexation permettant d'assurer qu'au repos l'organe de liaison se trouve dans la cavité à mi-distance des extrémités angulaires de cette dernière peut être prévu. Ce moyen d'indexation comprend par exemple des cannelures solidaires de la sortie en couple du composant pour système de transmission et des contre-formes ménagées dans le composant primaire du dispositif d'amortissement d'oscillations de torsion.

Du fait de cette venue en butée du composant secondaire contre le support, via le ou les organes de liaison, le composant secondaire est immobilisé en rotation par rapport au support au-delà d'un certain seuil de vitesses de rotation. Le composant secondaire est ainsi protégé pour ces vitesses de rotation, sans qu'il soit nécessaire de faire intervenir un limiteur de couple dans ce but. La solution ainsi proposée est alors économe.

Dans tout ce qui précède, le dispositif d'amortissement d'oscillations de torsion peut comprendre une pluralité d'organes de rappel élastiques disposés entre le composant primaire et le composant secondaire, de manière à générer la force de rappel élastique s'opposant à la rotation du composant secondaire par rapport au composant primaire. Chaque organe de rappel élastique peut s'étendre entre deux extrémités angulaires, chacune de ces extrémités angulaires présentant notamment: une portion radialement intérieure apte à venir en appui contre une paroi du composant primaire, et une portion radialement extérieure apte à venir en appui contre une paroi du composant secondaire. Autrement dit, chaque extrémité angulaire de l'organe de rappel élastique vient à la fois en contact avec le composant primaire et avec le composant secondaire. Chaque organe de rappel élastique est par exemple un ressort, notamment un ressort hélicoïdal.

Dans tout ce qui précède, le composant pour système de transmission peut comprendre une rondelle élastiquement déformable disposée du premier côté du support entre le dispositif d'amortissement d'oscillations de torsion et ledit support. Lorsque le dispositif d'amortissement d'oscillations de torsion se déplace axialement, du fait de l'interaction par frottement entre rampe(s) et contre-rampe(s), comme expliqué ci-dessus, cette rondelle élastiquement déformable peut se trouver comprimée du fait du rapprochement axial du dispositif d'amortissement d'oscillations de torsion vers le support. La rondelle élastiquement déformable peut alors fournir l'effort nécessaire à l'hystérésis associé au déplacement du composant secondaire par rapport au composant primaire. La rondelle élastiquement déformable est par exemple une rondelle ondulée, une telle rondelle procurant avantageusement une raideur constante.

La rondelle peut être immobilisée en rotation par rapport au support, la rondelle comprenant par exemple une portion, notamment une portion d'extrémité, reçue dans une ouverture du support, la coopération entre cette portion et cette ouverture fournissant un moyen d'anti-rotation.

Dans tout ce qui précède, le composant primaire peut définir une pluralité de logements dans chacun desquels est reçu au moins en partie un organe de rappel élastique. La paroi du composant primaire apte à contacter la zone radialement intérieure de l'extrémité angulaire d'un organe de rappel élastique appartient par exemple à une dent définissant une extrémité angulaire du logement pour un organe de rappel élastique.

Le composant primaire peut être monobloc ou être réalisé à l'aide de plusieurs pièces rigidement couplées entre elles. Dans ce cas, le logement pour un organe de rappel élastique peut être défini entre les pièces formant le composant primaire.

Le composant pour système de transmission est par exemple un disque d'embrayage. Dans ce cas, le disque comprend :
- au moins une garniture de friction définissant l'entrée en couple, cette garniture étant portée par le support,
- un moyeu mobile en rotation autour de l'axe de rotation précité, solidaire du support, et définissant la sortie en couple,

Le dispositif d'amortissement d'oscillations de torsion est alors porté par le moyeu et disposé du premier côté du support, hors du chemin emprunté par le couple transmis par le disque entre l'entrée en couple et la sortie en couple, tandis qu'au moins une partie du système de génération d'hystérésis est disposée du deuxième côté du support.

En variante, le dispositif d'amortissement d'oscillations de torsion est intégré à d'autres composants d'un système de transmission qu'un disque d'embrayage, par exemple à un convertisseur de couple hydrodynamique ou à un double volant amortisseur ou à une inertie primaire tel qu'un volant.

L'invention a encore pour objet, selon un autre de ses aspects, un disque d'embrayage, comprenant :
- au moins une garniture de friction définissant une entrée en couple et portée par un support,
- un moyeu mobile en rotation autour d'un axe, solidaire du support, et définissant une sortie en couple,
- un dispositif d'amortissement d'oscillations de torsion, porté par le moyeu et disposé d'un premier côté du support, hors du chemin emprunté par le couple transmis par le disque entre l'entrée en couple et la sortie en couple, le dispositif d'amortissement présentant une fréquence de résonance fixe, et
- un système de génération d'hystérésis pour le dispositif d'amortissement d'oscillations de torsion, au moins une partie de ce système de génération d'hystérésis étant disposée d'un deuxième côté du support, axialement opposé au premier côté du support.

Tout ou partie des caractéristiques mentionnées ci-dessus s'applique à cet autre aspect de l'invention.

L'invention pourra être mieux comprise à la lecture de la description qui va suivre d'un exemple non limitatif de mise en oeuvre de celle-ci et à l'examen du dessin annexé sur lequel :
- la figure 1 est une vue de face d'un disque d'embrayage avec batteur selon un exemple de mise en oeuvre de l'invention,
- la figure 2 est une vue de côté du disque de la figure 1,
- la figure 3 est une vue de côté, sous un autre angle de vue, du disque de la figure 1,
- la figure 4 est une vue de profil du disque de la figure 1,
- la figure 5 est une vue en coupe selon V-V du disque de la figure 1, et
- la figure 6 est une vue en coupe selon VI-VI du disque de la figure 1.

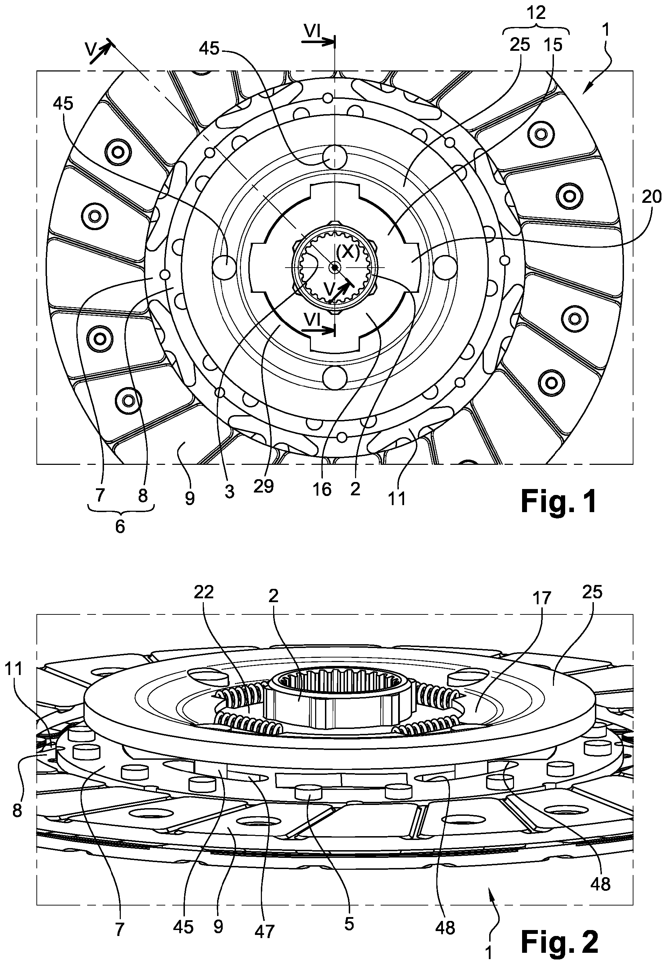

On a représenté sur la figure 1 un disque d' embrayage d'un système de transmission de véhicule automobile. Le véhicule est par exemple un véhicule pour passager, par opposition à un véhicule industriel qui serait par exemple un poids lourd, un véhicule de transport en commun, ou encore un véhicule agricole.

Le disque d'embrayage 1 comprend dans l'exemple considéré un moyeu 2 apte à entraîner en rotation autour d'un axe X un arbre non représenté d'une boîte de vitesses au moyen de cannelures 3.

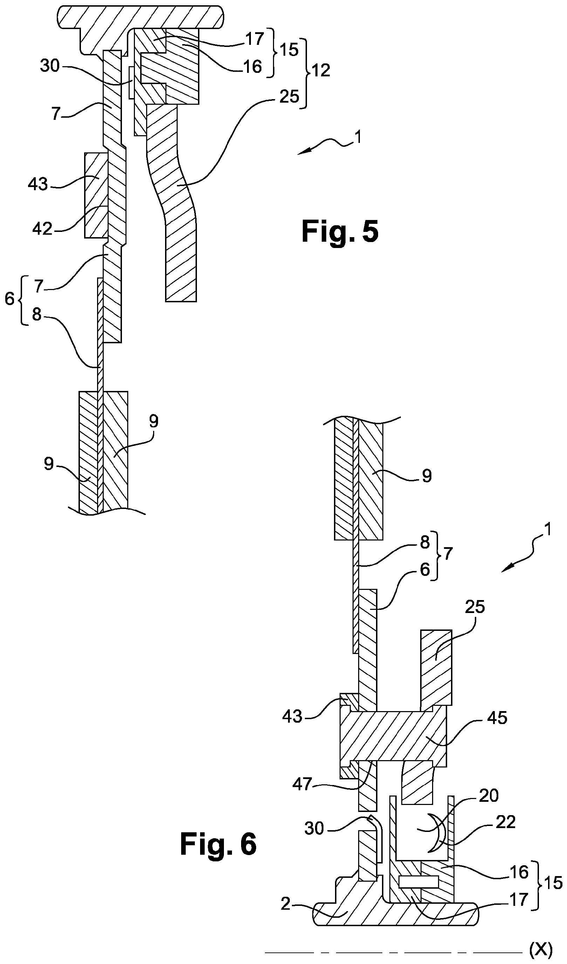

Le disque d'embrayage 1 comprend un support de garnitures de friction 6, mieux visible sur les figures 5 et 6. Le support 6 est dans l'exemple considéré en plusieurs parties. Il comprend un flasque 7 s'étendant radialement depuis le moyeu 2, et une plaque 8 supportant des garnitures de friction 9. La plaque 8 est ici fixée sur le flasque 7 par des rivets 5 visibles sur les figures 1 et 2. La plaque 8 s'étend majoritairement radialement extérieurement par rapport au flasque 7. Une pluralité de découpés 11 de même forme et ménagées dans la plaque 8 se succèdent par exemple autour de l'axe X.

Les garnitures de friction 9 définissent ainsi une entrée en couple pour le disque d'embrayage 1 tandis que le moyeu 2 définit une sortie en couple pour le disque 1.

Comme on peut le voir sur les figures, le support 6 des garnitures est ici solidaire du moyeu 2.

Le disque d'embrayage 1 comprend encore un dispositif 12 d'amortissement des oscillations de torsion. Le dispositif 12 est ici un batteur, c'est-à-dire qu'il est situé hors du chemin emprunté par le couple que transmet le disque 1 depuis les garnitures de friction 9 jusqu'au moyeu 2, et qu'il comprend une fréquence de résonance fixe et indépendant de la fréquence de résonance du moteur thermique du véhicule sur lequel est monté le disque d'embrayage 1. La fréquence de résonance du batteur 12 est dans l'exemple considéré comprise entre 8 Hz et 14 Hz.

Le batteur 12 comprend dans l'exemple considéré un composant primaire 15 disposé autour du moyeu 2. Le composant primaire 15 est ici solidaire en rotation du moyeu 2 mais mobile axialement par rapport à ce moyeu 2.

Dans l'exemple décrit, le composant primaire 15 est réalisé en deux parties 16 et 17 qui sont solidarisées entre elles et qui se succèdent globalement le long de l'axe X, comme on peut le voir sur les figures 5 et 6. La partie 17 du composant primaire 15 est celle qui est axialement la plus proche du support 6.

Pour des raisons de clarté du dessin, la partie 16 du composant primaire 15 n'est pas représentée sur la figure2. On peut ainsi voir que la partie 17 du composant primaire 15 présente sur sa face axialement en regard de la partie 16 des découpes coopérant avec des découpes de forme complémentaire ménagées sur la face de la partie 16 axialement en regard de la partie 17 pour définir des logements 20. Ces logements 20 reçoivent des organes de rappel élastique qui sont ici des ressorts 22 interposés entre le composant primaire 15 et un composant secondaire 25. Le composant secondaire 25 forme une masse de filtrage qui sera décrite plus précisément par la suite. Le composant secondaire 25 est mobile en rotation par rapport au composant primaire 15 autour de l'axe X, les ressorts 22 s'opposant à cette rotation du composant secondaire 25 par rapport au composant primaire 15.

Dans l'exemple considéré, les ressorts 22 sont quatre ressorts droits se succédant angulairement, chaque ressort 22 étant reçu dans un logement 20. Le ressort unique modélisant l'ensemble des ressorts 22 du batteur 12 présente par exemple un coefficient de raideur angulaire compris entre 0.02 Nm/° à 0.1 Nm/°. Chaque ressort 22 s'étend ici entre deux extrémités angulaires et chaque extrémité angulaire présente une zone radialement intérieure apte à venir en appui contre une paroi radiale du logement 20 et une zone radialement extérieure apte à venir en appui contre une paroi d'un nez 29 du composant secondaire 25 faisant radialement saillie vers l'intérieur.

Comme représenté sur les figures, le composant secondaire 25 s'étend globalement radialement extérieurement par rapport au composant primaire 15. Le composant secondaire 25 définit une masse qui présente par exemple un moment d'inertie compris entre 0.0005 et 0.002 kg.m².

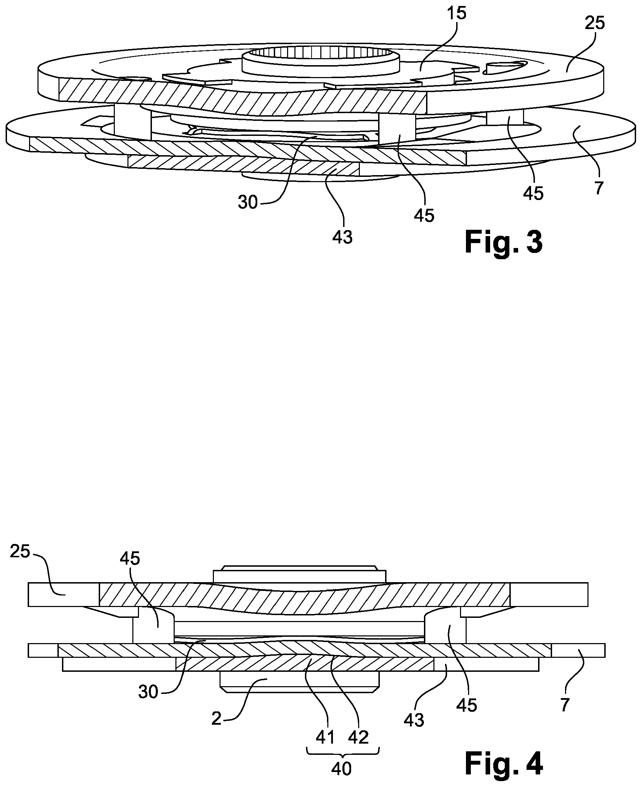

Le disque d'embrayage 1 comprend encore une rondelle élastiquement déformable 30, telle qu'une rondelle ondulée, qui est notamment visible sur les figures 3 et 4. Le rôle de cette rondelle 30 sera décrit ultérieurement. Cette rondelle 30 est dans l'exemple considéré positionnée axialement entre le batteur 12 et le support 6. La rondelle 30 peut venir alternativement en appui contre la partie 16 du composant primaire 15, comme représenté sur la figure 5, et alternativement en appui contre le flasque 7 du support 6, comme représenté sur la figure 6. La rondelle 30 peut coopérer avec une ouverture du flasque 7 pour réaliser une immobilisation en rotation de la rondelle 30 par rapport au flasque 7, comme représenté sur la figure 6.

Comme on peut le voir notamment sur les figures 5 et 6, le batteur 12 est ici disposé exclusivement axialement d'un seul côté du support 6. On dira par la suite que le batteur 12 est disposé axialement du premier côté du support 6.

Le disque d'embrayage 1 comprend encore un système 40 de génération d'hystérésis pour le déplacement du composant secondaire 25 par rapport au composant primaire 15, et ce système 40 de génération d'hystérésis est disposé exclusivement axialement d'un second côté du support 6, ce deuxième côté étant axialement opposé au premier côté précité.

Dans l'exemple considéré, le système 40 de génération d'hystérésis exerce un couple d'hystérésis variable pour le déplacement du composant secondaire 25 par rapport au composant primaire 15.

Ce couple d'hystérésis variable est obtenu au moyen de rampes 41 et de contre-rampes 42 qui vont maintenant être décrites.

Plusieurs rampes 41 sont portées par une pièce 43 qui est située du deuxième côté du support 6, c'est-à-dire que le support 6 est axialement interposé entre la pièce 43 et le batteur 12. La pièce 43 est dans l'exemple considéré une pièce annulaire évidée intérieurement, centrée sur l'axe de rotation X du disque d'embrayage 1. La pièce 43 n'est pas élastiquement déformable dans l'exemple considéré.

Plusieurs rampes 41 de forme identique se succédant angulairement peuvent être ménagées sur la pièce 43, par exemple par déformation locale de la matière de celle-ci ou par moulage.

Sur la figure 4, où seule une rampe 41 est visible, on constate que cette dernière a dans l'exemple décrit un profil convexe, c'est-à-dire qu'elle fait saillie en direction du support 6.

Comme représenté sur les figures, le disque d'embrayage 1 peut comprendre plusieurs organes de liaison 45 qui solidarisent le composant secondaire 25 et la pièce 43 portant les rampes 41. Dans l'exemple décrit, ces organes de liaison 45 sont des rivets qui sont répartis uniformément autour de l'axe X de rotation. Les organes de liaison 45 permettent ainsi de solidariser en rotation et en translation, c'est-à-dire solidariser au sens de la présente demande, le composant secondaire 25 et la pièce 43.

Le composant primaire 15, le composant secondaire 25 et la pièce 43 peuvent ainsi former un seul ensemble mobile axialement en translation par rapport au support 6.

Comme on peut notamment le voir sur la figure 6, chaque organe de liaison 45 s'étend de part et d'autre du support 6. Chaque organe de liaison 45 est reçu dans une cavité 47 ménagée dans le support 6. Plus précisément, dans l'exemple considéré, chaque cavité 47 est ménagée dans le flasque 7. Ce dernier comprend alors plusieurs cavités 47 qui se succèdent angulairement, chaque cavité 47 coopérant avec un unique organe de liaison 45.

Chaque cavité 47 est définie par un contour fermé, s'étendant angulairement entre deux extrémités angulaires 48 dont le rôle sera décrit ultérieurement.

Les contre-rampes 42 du système de génération d'hystérésis 40 sont dans l'exemple considéré ménagées directement dans le support 6, et dans le deuxième côté de ce dernier. Les contre-rampes 42 sont alors axialement directement en regard des rampes 41, comme on peut par exemple le voir sur la figure 4. Les contre-rampes 42 sont ici réalisées par frappe sur le deuxième côté du flasque 7. Le nombre de contre-rampes 42 est ici égal au nombre de rampes 41 et les contre-rampes 42 se succèdent angulairement sur le deuxième côté du flasque 7.

Dans l'exemple considéré, chaque contre-rampe 42 présente un profil concave.

On va maintenant décrire le fonctionnement du batteur 12 lorsque des oscillations de torsion se propagent dans le disque d'embrayage 1.

Du fait de ces oscillations de torsion, le composant secondaire 25 se déplace en rotation par rapport au composant primaire 15, contre la force de rappel exercée par les organes de rappel élastique 22. Ce déplacement du composant secondaire 25 correspond également à un déplacement en rotation de la pièce 43, du fait de la présence des organes de liaison 45.

Le déplacement de la pièce 43 entraîne un déplacement des rampes 41 par rapport aux contre-rampes 42 portées par le support 6. L'interaction des rampes 41 et des contre-rampes 42 lors de ce déplacement en rotation de la pièce 43 par rapport au support 6 occasionne un frottement qui génère ainsi un couple d'hystérésis variable, ainsi qu'un déplacement axial par rapport au support 6 de l'ensemble formé par le batteur 12 et par la pièce 43. Ce déplacement axial conduit à une compression de la rondelle 30, disposée axialement entre le support 6 et le batteur 12.

L'amplitude du déplacement en rotation du composant secondaire 25 par rapport au composant primaire 15 est déterminée par l'amplitude du déplacement en rotation des organes de liaison 45 avant leur venue en butée contre une extrémité angulaire 48 de la cavité 47 du support 6 dans laquelle ils sont reçus. En effet, du fait de la présence des organes de liaison 45, toute immobilisation en rotation autour de l'axe X de ces derniers conduit à une immobilisation en rotation autour de l'axe X du composant secondaire 25.

Dans l'exemple considéré, chaque cavité 47 présente une dimension angulaire, mesurée entre ses deux extrémités 48, telle que le composant secondaire 25 se déplace en rotation par rapport au composant primaire 15 selon une amplitude de l'ordre de 15°.

Le couple exercé par le système 40 de génération d'hystérésis est dans l'exemple considéré compris entre 0,1 Nm et 2 Nm, la valeur maximale de couple d'hystérésis étant obtenue lorsque le composant secondaire 25 tourne par rapport au composant primaire 15 d'une valeur angulaire égale à l'amplitude de rotation, ici 15°.

L'invention n'est pas limitée à l'exemple qui vient d'être décrit.

Les rampes 41 et les contre-rampes 42 peuvent par exemple présenter des formes différentes de celles décrites. Le système 40 de génération d'hystérésis est par exemple tel que le couple d'hystérésis soit d'abord croissant puis constant depuis la position au repos du batteur 12.

## Revendications

1. Composant (1) pour système de transmission, comprenant :
- une entrée en couple (9),
- une sortie en couple (2) mobile en rotation autour d'un axe (X),
- un support (6), disposé dans le chemin emprunté par le couple transmis par le composant (1) entre l'entrée en couple (9) et la sortie en couple (2),
- un dispositif d'amortissement d'oscillations de torsion (12), hors du chemin emprunté par le couple transmis par le composant (1) entre l'entrée en couple et la sortie en couple, le dispositif d'amortissement (12) présentant une fréquence de résonance fixe, et
- un système de génération d'hystérésis (40) pour le dispositif d'amortissement d'oscillations de torsion (12),
**caractérisé en ce que** le dispositif d'amortissement d'oscillations de torsion (12) est disposé d'un premier côté du support (6) et **en ce qu'**au moins une partie du système de génération d'hystérésis (40) est disposée d'un deuxième côté du support (6), axialement opposé au premier côté du support (6).

2. Composant (1) selon la revendication 1, le dispositif d'amortissement d'oscillations de torsion (12) comprenant :
- un composant primaire (15), solidaire en rotation de la sortie en couple (2), et
- un composant secondaire (25), mobile en rotation autour de l'axe (X) par rapport au composant primaire (15) contre une force de rappel élastique,
le système de génération d'hystérésis (40) permettant le déplacement avec hystérésis du composant secondaire (25) par rapport au composant primaire (15), et comprenant au moins une rampe (41) portée par une pièce (43) solidaire en rotation du composant secondaire (25) et disposée du deuxième côté du support (6).

3. Composant (1) selon la revendication 2, le système de génération d'hystérésis (40) comprenant au moins une contre-rampe (42) disposée du deuxième côté du support (6) et solidaire du support (6), la rampe (41) et la contre-rampe (42) interagissant par frottement lors de la rotation du composant secondaire (25) par rapport au composant primaire (15).

4. Composant (1) selon la revendication 3, la contre-rampe (42) étant ménagée directement dans le support (6), dans le deuxième côté de ce dernier.

5. Composant (1) selon la revendication 3 ou 4, la pièce (43) portant la rampe (41) étant mobile axialement par rapport au support (6), de sorte que l'interaction par frottement entre la rampe (41) et la contre-rampe (42) puisse entraîner un déplacement axial par rapport au support (6) de la pièce (43) portant la rampe (41).

6. Composant (1) selon l'une quelconque des revendications 2 à 5, comprenant au moins un organe de liaison (45) du composant secondaire (25) et de la pièce (43) portant la rampe (41), cet organe de liaison (45) étant rigidement couplé d'une part au composant secondaire (25) et d'autre part à ladite pièce (43), et étant reçu dans une cavité (47) ménagée dans le support (6).

7. Composant (1) selon les revendications 5 et 6, le dispositif d'amortissement d'oscillations de torsion (12), l'organe de liaison (45), et la pièce (43) portant la rampe (41), formant un seul ensemble solidaire en déplacement axial, de sorte que l'interaction par frottement entre la rampe (41) et la contre-rampe (42) puisse entraîner un déplacement axial par rapport au support (6) de cet ensemble solidaire.

8. Composant (1) selon la revendication 6 ou 7, la cavité (47) étant définie par un contour fermé dont les extrémités angulaires (48) agissent comme butée pour le déplacement en rotation du composant secondaire (25) par rapport au composant primaire (15).

9. Composant (1) selon l'une quelconque des revendications 2 à 8, comprenant une pluralité d'organes de rappel élastiques (22) disposés entre le composant primaire (15) et le composant secondaire (25), de manière à générer la force de rappel élastique s'opposant à la rotation du composant secondaire (25) par rapport au composant primaire (15), chaque organe de rappel élastique (22) s'étendant entre deux extrémités angulaires, chacune de ces extrémités angulaires présentant notamment: une portion radialement intérieure apte à venir en appui contre une paroi du composant primaire (15), et une portion radialement extérieure apte à venir en appui contre une paroi du composant secondaire (25).

10. Composant (1) selon l'une quelconque des revendications 2 à 9, le système de génération d'hystérésis (40) comprenant une pluralité de rampes (41) et une pluralité de contre-rampes (42), chaque rampe (41) interagissant par frottement avec une contre-rampe (42) lors de la rotation du composant secondaire (25) par rapport au composant primaire (15).

11. Composant (1) selon l'une quelconque des revendications précédentes, comprenant une rondelle élastiquement déformable (30) disposée du premier côté du support (6) entre le dispositif d'amortissement d'oscillations de torsion (12) et ledit support (6).

12. Composant (1) selon l'une quelconque des revendications précédentes, formant un disque d'embrayage, ce disque (1) comprenant :
- au moins une garniture de friction (9) définissant l'entrée en couple, cette garniture étant portée par le support (6),
- un moyeu (2) mobile en rotation autour de l'axe (X), solidaire du support (6), et définissant la sortie en couple,
le dispositif d'amortissement d'oscillations de torsion (12) étant porté par le moyeu (2) et disposé du premier côté du support (6), hors du chemin emprunté par le couple transmis par le disque (1) entre l'entrée en couple et la sortie en couple, au moins une partie du système de génération d'hystérésis (40) étant disposée du deuxième côté du support (6).

## Patentansprüche

1. Komponente (1) für ein Übertragungssystem, umfassend:
- einen Drehmomenteingang (9),
- einen Drehmomentausgang (2), der um eine Achse (X) drehbeweglich ist,
- einen Träger (6), der auf dem Pfad angeordnet ist, den das von der Komponente (1) übertragene Drehmoment zwischen dem Drehmomenteingang (9) und dem Drehmomentausgang (2) nimmt,
- eine Drehschwingungsdämpfungsvorrichtung (12), die außerhalb des Pfades angeordnet ist, den das von der Komponente (1) übertragene Drehmoment zwischen dem Drehmomenteingang und dem Drehmomentausgang nimmt, wobei die Dämpfungsvorrichtung (12) eine feste Resonanzfrequenz aufweist, und
- ein Hystereseerzeugungssystem (40) für das Drehschwingungsdämpfungssystem (12),
**dadurch gekennzeichnet, dass** die Drehschwingungsdämpfungsvorrichtung (12) auf einer ersten Seite des Trägers (6) angeordnet ist und dass mindestens ein Teil des Hystereseerzeugungssystems (40) auf einer zweiten Seite des Trägers (6) angeordnet ist, die zur ersten Seite des Trägers (6) axial entgegengesetzt ist.

2. Komponente (1) nach Anspruch 1, wobei die Drehschwingungsdämpfungsvorrichtung (12) umfasst:
- eine Primärkomponente (15), die drehfest mit dem Drehmomentausgang (2) ist, und
- eine Sekundärkomponente (25), die drehbeweglich um die Achse (X) in Bezug auf die Primärkomponente (15) gegen eine elastische Rückstellkraft ist,
wobei das Hystereseerzeugungssystem (40) das Verlagern mit Hysterese der Sekundärkomponente (25) in Bezug auf die Primärkomponente (15) ermöglicht und mindestens eine Rampe (41) umfasst, die von einem Teil (43) getragen wird, das drehfest mit der Sekundärkomponente (25) ist und auf der zweiten Seite des Trägers (6) angeordnet ist.

3. Komponente (1) nach Anspruch 2, wobei das Hystereseerzeugungssystem (40) mindestens eine Gegenrampe (42) umfasst, die auf der zweiten Seite des Trägers (6) angeordnet ist und mit dem Träger (6) fest verbunden ist, wobei die Rampe (41) und die Gegenrampe (42) beim Drehen der Sekundärkomponente (25) in Bezug auf die Primärkomponente (15) durch Reibung zusammenwirken.

4. Komponente (1) nach Anspruch 3, wobei die Gegenrampe (42) direkt im Träger (6) in dessen zweiter Seite ausgebildet ist.

5. Komponente (1) nach Anspruch 3 oder 4, wobei das Teil (43), das die Rampe (41) trägt, in Bezug auf den Träger (6) axial beweglich ist, so dass das Zusammenwirken durch Reibung zwischen der Rampe (41) und der Gegenrampe (42) eine axiale Verlagerung in Bezug auf den Träger (6) des Teils (43), das die Rampe (41) trägt, bewirken kann.

6. Komponente (1) nach einem der Ansprüche 2 bis 5, umfassend mindestens ein Verbindungsorgan (45) der Sekundärkomponente (25) und des Teils (43), das die Rampe (41) trägt, wobei dieses Verbindungsorgan (45) einerseits mit der Sekundärkomponente (25) und andererseits mit dem Teil (43) starr gekuppelt ist und in einem in dem Träger (6) ausgebildeten Hohlraum (47) aufgenommen ist.

7. Komponente (1) nach einem der Ansprüche 5 und 6, wobei die Drehschwingungsdämpfungsvorrichtung (12), das Verbindungsorgan (45) und das Teil (43), das die Rampe (41) trägt, eine einzige Anordnung bilden, die bei axialer Verlagerung fest verbunden ist, so dass das Zusammenwirken durch Reibung zwischen der Rampe (41) und der Gegenrampe (42) eine axiale Verlagerung dieser fest verbundenen Anordnung in Bezug auf den Träger (6) bewirken kann.

8. Komponente (1) nach Anspruch 6 oder 7, wobei der Hohlraum (47) durch eine geschlossene Kontur definiert wird, deren Winkelenden (48) bei der Drehverlagerung der Sekundärkomponente (25) in Bezug auf die Primärkomponente (15) wie ein Anschlag wirken.

9. Komponente (1) nach einem der Ansprüche 2 bis 8, umfassend eine Vielzahl von elastischen Rückstellorganen (22), die zwischen der Primärkomponente (15) und der Sekundärkomponente (25) angeordnet sind, so dass sie die elastische Rückstellkraft erzeugen, die der Drehung der Sekundärkomponente (25) in Bezug auf die Primärkomponente (15) entgegenwirkt, wobei sich jedes elastische Rückstellorgan (22) zwischen zwei Winkelenden erstreckt, wobei jedes dieser Winkelenden insbesondere aufweist: einen radial inneren Abschnitt, der geeignet ist, gegen eine Wand der Primärkomponente (15) in Anlage zu gelangen, und einen radial äußeren Abschnitt, der geeignet ist, gegen eine Wand der Sekundärkomponente (25) in Anlage zu gelangen.

10. Komponente (1) nach einem der Ansprüche 2 bis 9, wobei das Hystereseerzeugungssystem (40) eine Vielzahl von Rampen (41) und eine Vielzahl von Gegenrampen (42) umfasst, wobei jede Rampe (41) bei der Drehung der Sekundärkomponente (25) in Bezug auf die Primärkomponente (15) durch Reibung mit einer Gegenrampe (42) zusammenwirkt.

11. Komponente (1) nach einem der vorhergehenden Ansprüche, umfassend eine elastisch verformbare Scheibe (30), die auf der ersten Seite des Trägers (6) zwischen der Drehschwingungsdämpfungsvorrichtung (12) und dem Träger (6) angeordnet ist.

12. Komponente (1) nach einem der vorhergehenden Ansprüche, eine Kupplungsscheibe bildend, wobei diese Scheibe (1) umfasst:
- mindestens einen Reibbelag (9), der den Drehmomenteingang definiert, wobei dieser Belag vom Träger (6) getragen wird,
- eine Nabe (2), die um eine Achse (X) drehbeweglich ist , mit dem Träger (6) fest verbunden ist und einen Drehmomentausgang definiert,
wobei die Drehschwingungsdämpfungsvorrichtung (12) von der Nabe (2) getragen wird und auf der ersten Seite des Trägers (6) außerhalb des Pfades angeordnet ist, den das von der Scheibe (1) übertragene Drehmoment zwischen dem Drehmomenteingang und dem Drehmomentausgang nimmt,
wobei mindestens ein Teil des Hystereseerzeugungssystems (40) auf der zweiten Seite des Trägers (6) angeordnet ist.

## Claims

1. Component (1) for transmission system, comprising:
- a torque input (9),
- a torque output (2) rotatably mobile about an axis (X),
- a support (6), arranged in the path taken by the torque transmitted by the component (1) between the torque input (9) and the torque output (2),
- a torsional vibration damping device (12), outside the path taken by the torque transmitted by the component (1) between the torque input and the torque output, the damping device (12) having a fixed resonance frequency, and
- a hysteresis generation system (40) for the torsional vibration damping device (12),
**characterized in that** the torsional vibration damping device (12) is arranged on a first side of the support (6) and **in that** at least one part of the hysteresis generation system (40) is arranged on a second side of the support (6), axially opposite the first side of the support (6).

2. Component (1) according to Claim 1, the torsional vibration damping device (12) comprising:
- a primary component (15), constrained to rotate with the torque output (2), and
- a secondary component (25), rotatably mobile about the axis (X) relative to the primary component (15) against an elastic return force,
the hysteresis generation system (40) allowing the movement with hysteresis of the secondary component (25) relative to the primary component (15), and comprising at least one ramp (41) held by a part (43) constrained to rotate with the secondary component (25) and arranged on the second side of the support (6).

3. Component (1) according to Claim 2, the hysteresis generation system (40) comprising at least one counter-ramp (42) arranged on the second side of the support (6) and rigidly connected to the support (6), the ramp (41) and the counter-ramp (42) interacting by friction during the rotation of the secondary component (25) relative to the primary component (15).

4. Component (1) according to Claim 3, the counter-ramp (42) being formed directly in the support (6), on the second side thereof.

5. Component (1) according to Claim 3 or 4, the part (43) holding the ramp (41) being axially mobile relative to the support (6), so that the interaction by friction between the ramp (41) and the counter-ramp (42) can result in an axial movement relative to the support (6) of the part (43) holding the ramp (41).

6. Component (1) according to any one of Claims 2 to 5, comprising at least one connecting member (45) for connecting the secondary component (25) and the part (43) holding the ramp (41), this connecting member (45) being rigidly coupled to both the secondary component (25) and said part (43), and being received in a cavity (47) formed in the support (6).

7. Component (1) according to Claims 5 and 6, the torsional vibration damping device (12), the connecting member (45) and the part (43) holding the ramp (41) forming a single unit rigidly connected for conjoint axial movement, so that the interaction by friction between the ramp (41) and the counter-ramp (42) can result in an axial movement relative to the support (6) of this rigidly connected unit.

8. Component (1) according to Claim 6 or 7, the cavity (47) being defined by a closed outline the angular ends (48) of which serve as a stop for the rotation of the secondary component (25) relative to the primary component (15).

9. Component (1) according to any one of Claims 2 to 8, comprising a plurality of elastic return members (22) arranged between the primary component (15) and the secondary component (25) in such a way as to generate the elastic return force opposing the rotation of the secondary component (25) relative to the primary component (15), each elastic return member (22) extending between two angular ends, each of these angular ends having in particular: a radially inner portion capable of pressing against a wall of the primary component (15), and a radially outer portion capable of pressing against a wall of the secondary component (25) .

10. Component (1) according to any one of Claims 2 to 9, the hysteresis generation system (40) comprising a plurality of ramps (41) and a plurality of counter-ramps (42), each ramp (41) interacting by friction with a counter-ramp (42) during the rotation of the secondary component (25) relative to the primary component (15).

11. Component (1) according to any one of the previous claims, comprising an elastically deformable washer (30) arranged on the first side of the support (6) between the torsional vibration damping device (12) and said support (6).

12. Component (1) according to any one of the previous claims, forming a clutch disc, this disc (1) comprising:
- at least one friction lining (9) defining the torque input, this lining being held by the support (6),
- a hub (2) rotatably mobile about the axis (X), rigidly connected to the support (6), and defining the torque output,
the torsional vibration damping device (12) being held by the hub (2) and arranged on the first side of the support (6), outside the path taken by the torque transmitted by the disc (1) between the torque input and the torque output, at least one part of the hysteresis generation system (40) being arranged on the second side of the support (6).
